(19) Europäisches Patentamt
European Patent Office
Office européen des brevets

(11) **EP 4 246 183 B1**

(12) **EUROPEAN PATENT SPECIFICATION**

(45) Date of publication and mention of the grant of the patent:
**06.08.2025 Bulletin 2025/32**

(21) Application number: **22163026.2**

(22) Date of filing: **18.03.2022**

(51) International Patent Classification (IPC):
*G01S 13/42* (2006.01)   *G01S 13/52* (2006.01)
*G01S 7/292* (2006.01)   *G01S 7/41* (2006.01)
*G01S 5/02* (2010.01)   *G06T 7/174* (2017.01)
*G06V 20/58* (2022.01)

(52) Cooperative Patent Classification (CPC):
**G01S 13/42; G01S 7/2923; G01S 7/417; G01S 13/52; G06V 20/58;** G06F 2218/08

(54) **METHOD AND DEVICE FOR SEGMENTING RADAR DATA**

VERFAHREN UND VORRICHTUNG ZUR SEGMENTIERUNG VON RADARDATEN

PROCÉDÉ ET DISPOSITIF DE SEGMENTATION DE DONNÉES RADAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.09.2023 Bulletin 2023/38**

(73) Proprietor: **Robert Bosch GmbH**
**70442 Stuttgart (DE)**

(72) Inventors:
• **Remenyi, Istvan**
**2890 Tata (HU)**
• **Karasz, Zoltan**
**1141 Budapest (HU)**

(56) References cited:
**EP-A1- 3 937 079   DE-A1- 102018 002 521**

• **SCHUMANN OLE ET AL: "Semantic Segmentation on Radar Point Clouds", 2018 21ST INTERNATIONAL CONFERENCE ON INFORMATION FUSION (FUSION), ISIF, 10 July 2018 (2018-07-10), pages 2179 - 2186, XP033397841, DOI: 10.23919/ICIF.2018.8455344**
• **CHARLES R QI ET AL: "PointNet: Deep Learning on Point Sets for 3D Classification and Segmentation", ARXIV.ORG, CORNELL UNIVERSITY LIBRARY, 201 OLIN LIBRARY CORNELL UNIVERSITY ITHACA, NY 14853, 2 December 2016 (2016-12-02), XP080736277, DOI: 10.1109/CVPR.2017.16**

**Description**

The present invention relates to a method and a device for segmenting radar data of a vehicle.

Prior Art

Driver assistance systems rely on the detection of objects in a surrounding of the vehicle. Modern vehicles can comprise multiple sensors of different types, such as radar sensors, cameras, infrared sensors, lidar sensors and the like.
Based on the sensor data, objects can be identified. For example, a radar sensor can emit radar signals which are reflected by objects in a surrounding of the vehicle. The coordinates of the reflecting objects can be determined by analyzing the received radar signals. Each of the recognized objects can be tracked over time. For example, the moving directions or velocities of the tracked candidate objects can be determined. Such information is important to estimate the likelihoods of possible events, such as a possible collision with another vehicle. Based on this information, the driver assistance systems can inform the driver of possibly dangerous situations or can control functions of the vehicle, such as an adjustment of the speed or the steering angle of the vehicle.
The driver assistance system needs information about the interpretation of radar reflection points determined based on radar data. That is, the radar reflection points must be segmented into different classes, e.g., non-stationary objects, stationary objects and noise.
Point-wise feature transformations are disclosed in Qi et al., "PointNet: Deep Learning on Point Sets for 3D Classification and Segmentation", https://arxiv.org/abs/1612.00593. Point-wise feature transformations are computationally fast and can capture the local neighborhood information precisely for every point.
Further, a generic 3D detection network that unifies feature extraction and bounding box prediction into a single stage, end-to-end trainable deep network is disclosed in Zhou et al., "VoxelNet: End-to-End Learning for Point Cloud Based 3D Object Detection", https://arxiv.org/abs/1711.06396. Schumann et al,. "Semantic Segmentation on Radar Point Clouds", 21st International Conference on information fusion, 2018, pages 2179-2186, relates to semantic segmentation, wherein a radar point cloud is used as an input to a classifier. DE 10 2018 002521 A1 relates to a method for recognizing persons on the basis of radar sensor data.

Disclosure of the Invention

The invention provides a method and a device for segmenting radar data as recited in the independent claims.
Preferred embodiments are set out in the dependent claims.

Advantages of the invention

When handling sparse data, information extracted from preceding frames can help to make the algorithms more reliable. If the ego vehicle's movement is properly tracked, consecutive radar recordings can be transformed into a common coordinate system. When the planar coordinates of each radar location are extended with a timestamp attribute (the time-based coordinate), movementdependent linear patterns are formed per object (radar reflection). The orientation of these patterns represent the dynamics of the reflections. In other words, the local neighborhood of each point will hold their dynamic information. The neighborhood information is taken into account by constraining the network architecture to be explicitly able to capture the surroundings of each radar reflection.
The architecture of the artificial neural network is different from the PointNet architecture by replacing a global feature extraction layer by a layer similar to the Voxel Feature Encoding Layer disclosed in Zhou et al.
According to a further aspect of the device for segmenting radar data of the vehicle, the trained artificial network is configured to generate, at a hidden layer, a $n \cdot m$-dimensional feature matrix corresponding to local features, based on the input, wherein m is an integer. The trained artificial network further generates the first $n \cdot p$-dimensional feature matrix based on the $n \cdot m$-dimensional feature matrix. The dimension m is a hyperparameter which may be chosen according to the specific use case.
According to a further aspect of the device for segmenting radar data of the vehicle, the trained artificial network is configured to concatenate the $n \cdot m$-dimensional feature matrix with the second $n \cdot p$-dimensional feature matrix and to generate the segmentation of the radar reflections based on the result obtained by the concatenation (i.e. a $n \cdot (m+p)$-dimensional feature matrix). Herein, the $n \cdot m$-dimensional feature matrix takes local data into account (depends strongly on the reflection point), whereas the second $n \cdot p$-dimensional feature matrix takes global data into account (depends strongly on the neighborhood of the radar reflection).
According to the invention, the time-based coordinate of each radar reflection has a unit of distance. To obtain a unit of distance, a measurement time may be transformed by multiplication with a predetermined velocity. The velocity may be fixed but may also depend on time.

According to the invention, the distance D (i.e. metric) between two reflection points is computed by the following formula:

$$D^2 = dx^2 + dy^2 + dz^2 - (vt)^2, \qquad (1)$$

wherein *dx, dy* and *dz* denote differences between the spatial coordinates of the reflection points for three orthogonal axes of the global coordinate system, wherein *v* denotes a velocity of the vehicle, and wherein t denotes a difference between the temporal coordinate of the reflection points.

According to the invention, the k nearest neighboring radar reflections of an n-th radar reflection are given by the k radar reflections having the smallest distance from the n-th radar reflection with respect to distance D computed according to formula (1).

According to the invention, for each radar reflection associated with a certain measurement cycle, the time-based coordinate of the radar reflection is obtained by multiplying a measurement time of the associated measurement cycle with a current velocity of the vehicle.

According to a further aspect, the device for segmenting radar data of the vehicle further comprises a first-in first-out memory for storing the coordinates of the radar reflections. For an efficient space-time representation, multiple past frames (i.e., time-based coordinates and spatial coordinates) can be kept.

According to a further aspect of the device for segmenting radar data of the vehicle, the segmentation comprises a class of non-stationary objects and a class of stationary objects. In the space-time representation, stationary objects move along an essentially linear line parallel to a time axis. Non-stationary objects move along an essentially linear line which deviates from the time axis. Artificial neural networks are well-suited to identify such features and can therefore perform segmentation of the radar data with high accuracy.

According to a further aspect of the device for segmenting radar data of the vehicle, the segmentation comprises a class corresponding to noise. This allows to differentiate between actual objects and radar reflections which are caused by noise.

According to a further aspect of the device for segmenting radar data of the vehicle, the computing device is further configured to determine the global coordinate system as a current pose of the vehicle, based on a current velocity of the vehicle. By tracking the vehicle's movement, consecutive radar recordings can reliably be transformed into the common coordinate system. After each measurement cycle, the global coordinate system can be recomputed.

Short description of the drawings

Figure 1    shows a block diagram of a device for segmenting radar data according to an embodiment of the invention;
Figure 2    shows a schematic illustration of radar reflections;
Figure 3    shows a schematic illustration of a trained artificial neural network used in a device according to an embodiment of the invention; and
Figure 4    shows a flow chart of a method for segmenting radar data of a vehicle according to an embodiment of the invention.

Description of the embodiments

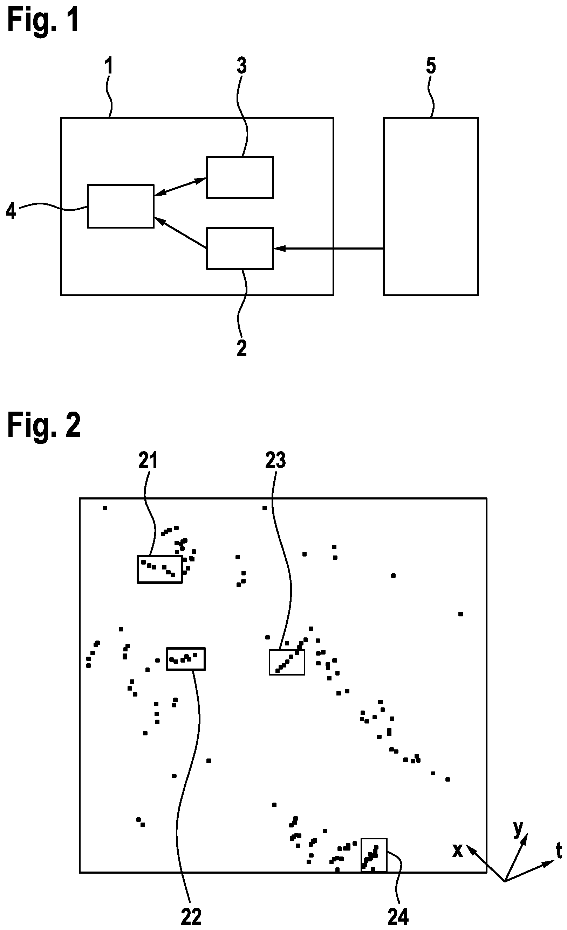

Figure 1 shows a block diagram of a device 1 for segmenting radar data of a vehicle. The device 1 comprises an interface 2 which communicates with one or more radar sensors 5 of the vehicle.

The interface 2 may communicate with the radar sensors 5 via a CAN bus or the like. The device 1 receives via the interface 2 new radar data from the at least one radar sensor 5. That is, after each measurement cycle (time stamp), new radar data is provided to the device 1. The device 1 may receive raw data from the radar sensor 5. According to other embodiments, the data may already be preprocessed.

The device 1 comprises a computing device 4, such as a microprocessor, microcontroller, a field-programmable gate array, or the like. The computing device 4 identifies after each measurement cycle new radar reflections based on the radar data acquired at the latest measurement cycle. The computing device 4 computes spatial coordinates of radar reflections, which can be two- or three-dimensional coordinates. The spatial coordinates of the radar reflections are defined relative to a global coordinate system, which may be given as a current pose of the vehicle, e.g., based on a current velocity of the vehicle.

Further, the computing device 4 associates a time-based coordinate with each radar reflection. The time-based coordinate also has a unit of distance like the spatial coordinates. The time-based coordinate of the radar reflection is obtained by multiplying a measurement time of the associated measurement cycle with a current velocity of the vehicle. The measurement time may indicate the specific time point of the measurement.

The device 1 further comprises a first-in first-out, FIFO, memory device 3 which stores the coordinates of the radar reflections. For the space-time representation, multiple past frames can be kept.

The computing device 4 provides the coordinates of the radar reflections of at least some of the measurement cycles as input to a trained artificial neural network.

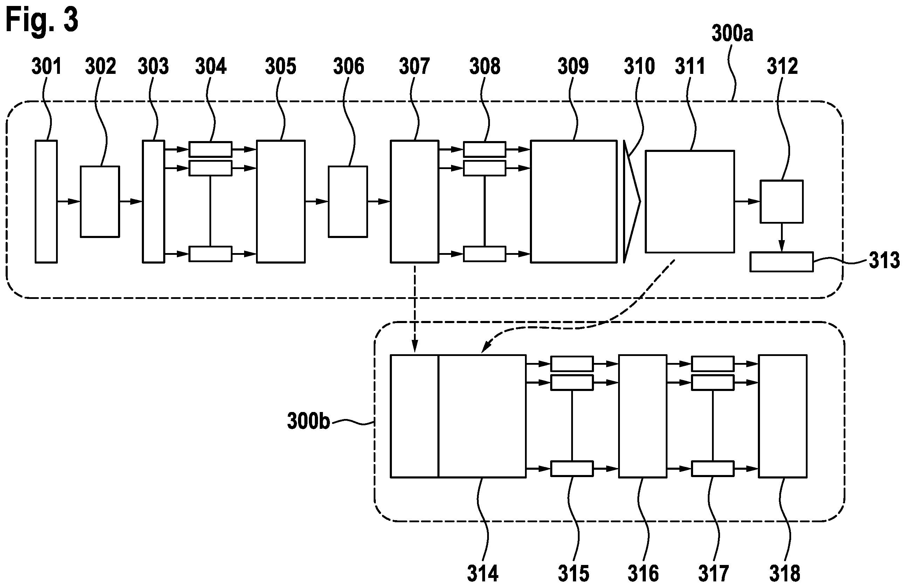

The artificial neural network may have been trained by supervised learning, i.e. by providing labeled data and training the weights of the artificial neural network. The architecture of the artificial neural network will be described below with regard to Figure 3.

The device 1 may be part of a driver assistance system which may further comprise a controlling device which may control at least one function of the vehicle based on the segmented radar data. For example, the controlling device may accelerate or decelerate the vehicle, or may influence the moving direction of the vehicle.

Figure 2 shows a schematic illustration of radar reflections. There are radar reflections 21 and 22 corresponding to moving (non-stationary objects) and radar reflections 23 and 24 corresponding to stationary objects. Herein, the radar reflections 23 and 24 corresponding to stationary objects follow trajectories which are essentially parallel to the time coordinate t. The labels x and y denote spatial dimensions.

Figure 3 shows a schematic illustration of a trained artificial neural network used in the device 1. The trained artificial neural network comprises a first part 300a which can be used for classification. A second part 300b is used for segmentation, based on intermediate results obtained by the first part 300a.

The first part 300a comprises an input layer having dimension $n \cdot 3$, wherein n denotes the number of the radar reflections and 3 relates to the coordinates of the radar reflections, which are 3 in the present case (two spatial coordinates and one time-based coordinate). In further embodiments, there may be three spatial coordinates.

A transform layer 302 transforms the input and generates transformed input 303 having dimension $n \cdot 3$, which is provided to a first multilayer perceptron 304, generating an intermediate feature matrix 305 with dimension $n \cdot m$. Herein, the dimension m of the features can be 64. However, said value is only illustrative and can be greater or smaller in other embodiments. The same applies to further dimensions discussed in the following.

The intermediate feature matrix 305 is supplied to the feature transform layer 306, generating a transformed $n \cdot m$-dimensional feature matrix 307. A second multilayer perceptron 308 generates a first $n \cdot p$-dimensional feature matrix 309, wherein p is a positive integer, e.g. at least 1024, which denotes the dimension of the feature space.

Details of the transform layers and multilayer perceptrons can be similar to the PointNet-Architecture proposed by Qi et al. The following now deviates from the PointNet-Architecture.

For each radar reflection (i.e. each value of n, that is the n-th radar reflection), a $p \cdot (k+1)$-dimensional matrix is generated based on the $n \cdot p$-dimensional feature matrix 309. Herein, k is a positive integer, where k relates to the number of nearest neighbors of the n-th radar reflection. The number k of neighbors can be fixed number, e.g. k = 2, 4, 6 or 8.

The nearest neighbors can be identified based on the distance D defined in formula (1) above.

The $p \cdot (k+1)$-dimensional matrix consists of the feature vectors of the $n \cdot p$-dimensional feature matrix 309 corresponding to the radar reflection itself (i.e. the n-th radar reflection) and corresponding to the k nearest neighbors of the n-th radar reflection.

For each radar reflection (i.e. each value of n, that is the n-th radar reflection), a max pooling function 310 is applied to the corresponding $p \cdot (k+1)$-dimensional matrix to along the (k+1) dimension (corresponding to the radar reflection and its neighbors), obtaining a p-dimensional feature vector. The p-dimensional feature vectors of all n reflection points are combined to generate a second $n \cdot p$-dimensional feature matrix 311.

According to an embodiment, a third multilayer perceptron 312 can be applied to the second $n \cdot p$-dimensional feature matrix 311 to provide output scores 313 classifying the entire set of radar reflections.

In the second part 300b, the $n \cdot m$-dimensional feature matrix 307 is concatenated with the second $n \cdot p$-dimensional feature matrix 311 to generate a $n \cdot (m+p)$-dimensional feature matrix 314. A fourth multilayer perceptron 315 generates a $n \cdot j$-dimensional feature matrix, where j is a positive integer, e.g. j = 128. A fifth multilayer perceptron 317 provides an $n \cdot i$-dimensional output score which is the segmentation of the n radar reflection into i classes.

Herein, i is a positive integer, e.g. i = 3 corresponding to a class of non-stationary objects, a class of stationary objects and a class of noise. According to further embodiments, the classes may comprise types of objects, e.g. a class corresponding to vehicles, a class corresponding to pedestrians, and the like. According to further embodiments, different velocities may be grouped into different classes during segmentation.

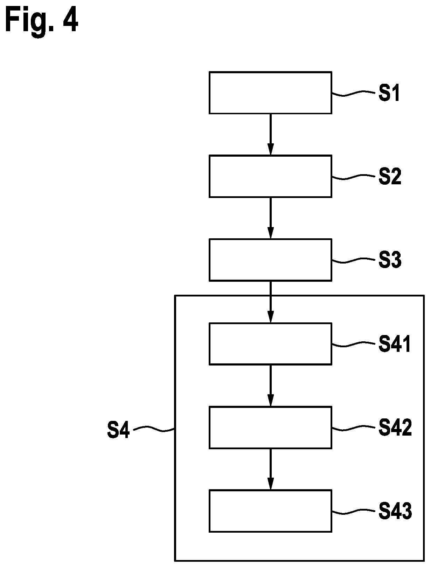

Figure 4 shows a flow chart of a method for segmenting radar data of a vehicle.

In a first step S1, radar data acquired at a plurality of measurement cycles is received from at least one radar sensor 5 of the vehicle.

For each measurement cycle, radar reflections are identified, S2, and coordinates of the radar reflections are determined, based on the radar data acquired at the measurement cycle. The coordinates of each radar reflection comprise a time-based coordinate and spatial coordinates (e.g. 2 or 3 dimensions). The spatial coordinates are defined relative to a global coordinate system (e.g. defined by the movement of the vehicle).

The coordinates of the radar reflections of at least some of the measurement cycles are provided as input to a trained artificial neural network, S4. An exemplary trained artificial neural network is shown in figure 3. A segmentation of the radar reflections is generated as output of the trained artificial neural network.

Generating the segmentation comprises generating a first n·p-dimensional feature matrix based on the input, S41, wherein n denotes the number of the radar reflections and wherein p is a positive integer.

The segmentation further comprises applying, S42, for each radar reflection, a max pooling function to a p·(k+1)-dimensional matrix comprising p-dimensional feature vectors of the first n·p-dimensional feature matrix corresponding to the radar reflection and k nearest neighboring radar reflections of said radar reflection, to generate a second n·p-dimensional feature matrix, wherein k is a positive integer.

The segmentation further comprises generating the segmentation of the radar reflections based on the second n·p-dimensional feature matrix, S43.

**Claims**

1. A device (1) for segmenting radar data of a vehicle, comprising:

   an interface (2) configured to receive, from at least one radar sensor (5) of the vehicle, radar data acquired at a plurality of measurement cycles; and
   a computing device (4) configured to:

   identify, for each measurement cycle, radar reflections and to determine coordinates of the radar reflections, based on the radar data acquired at the measurement cycle, wherein the coordinates of each radar reflection comprise a time-based coordinate and spatial coordinates, wherein the spatial coordinates are defined relative to a global coordinate system;
   provide the coordinates of the radar reflections of the measurement cycles as input to a trained artificial neural network; and
   generate a segmentation of the radar reflections as output of the trained artificial neural network;
   wherein the trained artificial network is configured to:

   generate a first n·p-dimensional feature matrix (309) based on the input, wherein n denotes the number of the radar reflections and wherein p is a positive integer;
   apply, for each radar reflection, a max pooling function to a p·(k+1)-dimensional matrix comprising p-dimensional feature vectors of the first n·p-dimensional feature matrix (309) corresponding to said radar reflection and k nearest neighboring radar reflections of said radar reflection, to generate a second n·p-dimensional feature matrix (311), wherein k is a positive integer; and
   generate the segmentation (318) of the radar reflections based on the second n·p-dimensional feature matrix (311);
   **characterized in that**
   the time-based coordinate of each radar reflection has a unit of distance, wherein, for each radar reflection associated with a certain measurement cycle, the time-based coordinate of the radar reflection is obtained by multiplying a measurement time of the associated measurement cycle with a current velocity of the vehicle,
   wherein a distance between two reflection points is computed by following formula (1):

$$[\text{Formula (1)}]$$

$$D^2 = dx^2 + dy^2 + dz^2 + - (vt)^2$$

   wherein dx, dy and dz denote differences between the spatial coordinates of the two reflection points for three orthogonal axes of the global coordinate system, wherein v denotes a velocity of the vehicle, and wherein t denotes a difference between a temporal coordinate of the two reflection points, and
   wherein the k nearest neighboring radar reflections of an n-th radar reflection are given by the k radar reflections having the smallest distance from the n-th radar reflection with respect to the distance computed according to formula (1).

2. The device (1) according to claim 1, wherein the trained artificial network is configured to:

generate, at a hidden layer, a n·m-dimensional feature matrix (307) corresponding to local features, based on the input, wherein m is an integer, and

generate the first n·p-dimensional feature matrix (309) based on the n·m-dimensional feature matrix (307).

3. The device (1) according to claim 2, wherein the trained artificial network is configured to concatenate the n·m-dimensional feature matrix (307) with the second n·p-dimensional feature matrix (311) and to generate the segmentation (318) of the radar reflections based on a result obtained by the concatenation.

4. The device (1) according to any of the preceding claims, further comprising a first-in first-out memory (3) for storing the coordinates of the radar reflections.

5. The device (1) according to any of the preceding claims, wherein the segmentation comprises a class of non-stationary objects and a class of stationary objects.

6. The device (1) according to any of the preceding claims, wherein the segmentation comprises a class corresponding to noise.

7. The device (1) according to any of the preceding claims, wherein the computing device (4) is further configured to determine the global coordinate system as a current pose of the vehicle, based on a current velocity of the vehicle.

8. A method for segmenting radar data of a vehicle, comprising:

receiving (S1), from at least one radar sensor (5) of the vehicle, radar data acquired at a plurality of measurement cycles;
identifying (S2), for each measurement cycle, radar reflections and determining coordinates of the radar reflections, based on the radar data acquired at the measurement cycle, wherein the coordinates of each radar reflection comprise a time-based coordinate and spatial coordinates,
wherein the spatial coordinates are defined relative to a global coordinate system;
providing (S3) the coordinates of the radar reflections of the measurement cycles as input to a trained artificial neural network; and
generating (S4) a segmentation of the radar reflections as output of the trained artificial neural network, comprising:

generating (S41) a first n·p-dimensional feature matrix (309) based on the input, wherein n denotes the number of the radar reflections and wherein p is a positive integer;
applying (S42), for each radar reflection, a max pooling function to a p·(k+1)-dimensional matrix comprising p-dimensional feature vectors of the first n·p-dimensional feature matrix (309) corresponding to said radar reflection and k nearest neighboring radar reflections of said radar reflection, to generate a second n·p-dimensional feature matrix (311), wherein k is a positive integer; and
generating (S43) the segmentation (318) of the radar reflections based on the second n·p-dimensional feature matrix (311);
**characterized in that**
the time-based coordinate of each radar reflection has a unit of distance, wherein, for

each radar reflection associated with a certain measurement cycle, the time-based coordinate of the radar reflection is obtained by multiplying a measurement time of the associated measurement cycle with a current velocity of the vehicle,
wherein a distance between two reflection points is computed by following formula (1):

[Formula (1)]

$$D^2 = dx^2 + dy^2 + dz^2 + - (vt)^2$$

wherein dx, dy and dz denote differences between the spatial coordinates of the two reflection points for three orthogonal axes of the global coordinate system, wherein v denotes a velocity of the vehicle, and wherein t denotes a difference between a temporal coordinate of the two reflection points, and
wherein the k nearest neighboring radar reflections of an n-th radar reflection are given by the k radar reflections having the smallest distance from the n-th radar reflection with respect to the distance computed according to formula (1).

## Patentansprüche

1. Vorrichtung (1) zur Segmentierung von Radardaten eines Fahrzeugs, welche umfasst:

eine Schnittstelle (2), die dafür ausgelegt ist, von mindestens einem Radarsensor (5) des Fahrzeugs Radardaten zu empfangen, die in einer Mehrzahl von Messzyklen erfasst wurden; und
eine Rechenvorrichtung (4), die ausgelegt ist zum:

Identifizieren, für jeden Messzyklus, von Radarreflexionen und Bestimmen von Koordinaten der Radarreflexionen basierend auf den in dem Messzyklus erfassten Radardaten, wobei die Koordinaten jeder Radarreflexion eine zeitbasierte Koordinate und räumliche Koordinaten umfassen, wobei die räumlichen Koordinaten bezüglich eines globalen Koordinatensystems definiert sind;
Bereitstellen der Koordinaten der Radarreflexionen der Messzyklen als Eingabe in ein trainiertes künstliches neuronales Netz; und
Erzeugen einer Segmentierung der Radarreflexionen als Ausgabe des trainierten künstlichen neuronalen Netzes;
wobei das trainierte künstliche Netz ausgelegt ist zum:

Erzeugen einer ersten n·p-dimensionalen Merkmalsmatrix (309) basierend auf der Eingabe, wobei n die Anzahl der Radarreflexionen bezeichnet und wobei p eine positive ganze Zahl ist;
Anwenden, für jede Radarreflexion, einer Max-Pooling-Funktion auf eine p·(k+1)-dimensionale Matrix, die p-dimensionale Merkmalsvektoren der ersten n·p-dimensionalen Merkmalsmatrix (309) umfasst, die dieser Radarreflexion und k nächsten benachbarten Radarreflexionen dieser Radarreflexion entsprechen, um eine zweite n·p-dimensionale Merkmalsmatrix (311) zu erzeugen, wobei k eine positive ganze Zahl ist; und
Erzeugen der Segmentierung (318) der Radarreflexionen basierend auf der zweiten n·p-dimensionalen Merkmalsmatrix (311);
**dadurch gekennzeichnet, dass**
die zeitbasierte Koordinate jeder Radarreflexion eine Entfernungseinheit aufweist, wobei für jede Radarreflexion, die einem bestimmten Messzyklus zugeordnet ist, die zeitbasierte Koordinate der Radarreflexion erhalten wird, indem eine Messzeit des zugeordneten Messzyklus mit einer aktuellen Geschwindigkeit des Fahrzeugs multipliziert wird,
wobei eine Entfernung zwischen zwei Reflexionspunkten durch folgende Formel (1) berechnet wird:

$$[\text{Formel (1)}]$$
$$D^2 = dx^2 + dy^2 + dz^2 + - (vt)^2$$

wobei dx, dy und dz Differenzen zwischen den räumlichen Koordinaten der zwei Reflexionspunkte für drei orthogonale Achsen des globalen Kommunikationssystems bezeichnen, wobei v eine Geschwindigkeit des Fahrzeugs bezeichnet und wobei t eine Differenz zwischen einer zeitlichen Koordinate der zwei Reflexionspunkte bezeichnet, und
wobei die k nächsten benachbarten Radarreflexionen einer n-ten Radarreflexion durch die k Radarreflexionen gegeben sind, welche die kleinste Entfernung von der n-ten Radarreflexion aufweisen, bezogen auf die gemäß Formel (1) berechnete Entfernung.

2. Vorrichtung (1) nach Anspruch 1, wobei das trainierte künstliche Netz ausgelegt ist zum:

Erzeugen, in einer verborgenen Schicht, einer n·m-dimensionalen Merkmalsmatrix (307), die lokalen Merkmalen entspricht, basierend auf der Eingabe, wobei m eine ganze Zahl ist, und
Erzeugen der ersten n·p-dimensionalen Merkmalsmatrix (309) basierend auf der n·m-dimensionalen Merkmalsmatrix (307).

3. Vorrichtung (1) nach Anspruch 2, wobei das trainierte künstliche Netz dafür ausgelegt ist, die n·m-dimensionale Merkmalsmatrix (307) mit der zweiten n·p-dimensionalen Merkmalsmatrix (311) zu verketten und die Segmentierung (318) der Radarreflexionen basierend auf einem durch die Verkettung erhaltenen Ergebnis zu erzeugen.

4. Vorrichtung (1) nach einem der vorhergehenden Ansprüche, welche ferner einen FIFO-Speicher (3) zum Speichern der Koordinaten der Radarreflexionen umfasst.

5. Vorrichtung (1) nach einem der vorhergehenden Ansprüche, wobei die Segmentierung eine Klasse von nichtstationären Objekten und eine Klasse von stationären Objekten umfasst.

6. Vorrichtung (1) nach einem der vorhergehenden Ansprüche, wobei die Segmentierung eine Klasse umfasst, die einem Rauschen entspricht.

7. Vorrichtung (1) nach einem der vorhergehenden Ansprüche, wobei die Rechenvorrichtung (4) ferner dafür ausgelegt ist, das globale Kommunikationssystem als eine aktuelle Lage des Fahrzeugs zu bestimmen, basierend auf einer aktuellen Geschwindigkeit des Fahrzeugs.

8. Verfahren zur Segmentierung von Radardaten eines Fahrzeugs, welches umfasst:

Empfangen (S1), von mindestens einem Radarsensor (5) des Fahrzeugs, von Radardaten, die in einer Mehrzahl von Messzyklen erfasst wurden;
Identifizieren (S2), für jeden Messzyklus, von Radarreflexionen und Bestimmen von Koordinaten der Radarreflexionen basierend auf den in dem Messzyklus erfassten Radardaten, wobei die Koordinaten jeder Radarreflexion eine zeitbasierte Koordinate und räumliche Koordinaten umfassen, wobei die räumlichen Koordinaten bezüglich eines globalen Koordinatensystems definiert sind;
Bereitstellen (S3) der Koordinaten der Radarreflexionen der Messzyklen als Eingabe in ein trainiertes künstliches neuronales Netz; und
Erzeugen (S4) einer Segmentierung der Radarreflexionen als Ausgabe des trainierten künstlichen neuronalen Netzes, umfassend:

Erzeugen (S41) einer ersten n·p-dimensionalen Merkmalsmatrix (309) basierend auf der Eingabe, wobei n die Anzahl der Radarreflexionen bezeichnet und wobei p eine positive ganze Zahl ist;
Anwenden (S42), für jede Radarreflexion, einer Max-Pooling-Funktion auf eine p·(k+1)-dimensionale Matrix, die p-dimensionale Merkmalsvektoren der ersten n·p-dimensionalen Merkmalsmatrix (309) umfasst, die dieser Radarreflexion und k nächsten benachbarten Radarreflexionen dieser Radarreflexion entsprechen, um eine zweite n·p-dimensionale Merkmalsmatrix (311) zu erzeugen, wobei k eine positive ganze Zahl ist; und
Erzeugen (S43) der Segmentierung (318) der Radarreflexionen basierend auf der zweiten n·p-dimensionalen Merkmalsmatrix (311);
**dadurch gekennzeichnet, dass**
die zeitbasierte Koordinate jeder Radarreflexion eine Entfernungseinheit aufweist, wobei für jede Radarreflexion, die einem bestimmten Messzyklus zugeordnet ist, die zeitbasierte Koordinate der Radarreflexion erhalten wird, indem eine Messzeit des zugeordneten Messzyklus mit einer aktuellen Geschwindigkeit des Fahrzeugs multipliziert wird,
wobei eine Entfernung zwischen zwei Reflexionspunkten durch folgende Formel (1) berechnet wird:

[Formel (1)]

$$D^2 = dx^2 + dy^2 + dz^2 + - (vt)^2$$

wobei dx, dy und dz Differenzen zwischen den räumlichen Koordinaten der zwei Reflexionspunkte für drei orthogonale Achsen des globalen Kommunikationssystems bezeichnen, wobei v eine Geschwindigkeit des Fahrzeugs bezeichnet und wobei t eine Differenz zwischen einer zeitlichen Koordinate der zwei Reflexionspunkte bezeichnet, und
wobei die k nächsten benachbarten Radarreflexionen einer n-ten Radarreflexion durch die k Radarreflexionen gegeben sind, welche die kleinste Entfernung von der n-ten Radarreflexion aufweisen, bezogen auf die gemäß Formel (1) berechnete Entfernung.

**Revendications**

1. Dispositif (1) pour segmenter des données radar d'un véhicule, comprenant :

   une interface (2) configurée pour recevoir, en provenance d'au moins un capteur radar (5) du véhicule, des données radar acquises à une pluralité de cycles de mesure ; et
   un dispositif de calcul (4) configuré pour :

      identifier, pour chaque cycle de mesure, des réflexions radar et pour déterminer des coordonnées des réflexions radar, sur la base des données radar acquises au cycle de mesure, dans lequel les coordonnées de chaque réflexion radar comprennent une coordonnée à base de temps et des coordonnées spatiales, dans lequel les coordonnées spatiales sont définies relativement à un système mondial de coordonnées ;
      fournir les coordonnées des réflexions radar des cycles de mesure en tant qu'entrée à un réseau neuronal artificiel entraîné ; et
      générer une segmentation des réflexions radar en tant que sortie du réseau neuronal artificiel entraîné ;
      dans lequel le réseau artificiel entraîné est configuré pour :

         générer une première n·p-matrice caractéristique dimensionnelle (309) sur la base de l'entrée, dans lequel n indique le nombre des réflexions radar et dans lequel p est un nombre entier positif ;
         appliquer, pour chaque réflexion radar, une fonction d'agrégation max à une p·(k+1)-matrice dimensionnelle comprenant p-vecteurs caractéristiques dimensionnels de la première n·p-matrice caractéristique dimensionnelle (309) correspondant à ladite réflexion radar et k réflexions radar voisines les plus proches de ladite réflexion radar, pour générer une seconde n·p-matrice caractéristique dimensionnelle (311), dans lequel k est un nombre entier positif ; et
         générer la segmentation (318) des réflexions radar sur la base de la seconde n·p-matrice caractéristique dimensionnelle (311) ;
         **caractérisé en ce que**
         la coordonnée à base de temps de chaque réflexion radar a une unité de distance, dans lequel, pour chaque réflexion radar associée à un certain cycle de mesure, la coordonnée à base de temps de la réflexion radar est obtenue en multipliant un temps de mesure du cycle de mesure associé à une vitesse actuelle du véhicule,
         dans lequel une distance entre deux points de réflexion est calculée par la formule suivante (1) :

$$[\text{Formule (1)}]$$
$$D^2 = dx^2 + dy^2 + dz^2 + - (vt)^2$$

         dx, dy et dz indiquant des différences entre les coordonnées spatiales des deux points de réflexion pour trois axes orthogonaux du système mondial de coordonnées, v indiquant une vitesse du véhicule, et t indiquant une différence entre une coordonnée temporelle des deux points de réflexion, et
         dans lequel les k réflexions radar voisines les plus proches d'une n-ième réflexion radar sont données par les k réflexions radar ayant la distance la plus petite quant à la n-ième réflexion radar par rapport à la distance calculée selon la formule (1).

2. Dispositif (1) selon la revendication 1, dans lequel le réseau artificiel entraîné est configuré pour :

   générer, à une couche cachée, une n·m-matrice caractéristique dimensionnelle (307) correspondant à des caractéristiques locales, sur la base de l'entrée, dans lequel m est un nombre entier, et
   générer la première n·p-matrice caractéristique dimensionnelle (309) sur la base de la n·m-matrice caractéristique dimensionnelle (307).

3. Dispositif (1) selon la revendication 2, dans lequel le réseau artificiel entraîné est configuré pour concaténer la n·m-matrice caractéristique dimensionnelle (307) avec la seconde n·p-matrice caractéristique dimensionnelle (311) et pour générer la segmentation (318) des réflexions radar sur la base d'un résultat obtenu par la concaténation.

4. Dispositif (1) selon de quelconques des revendications précédentes, comprenant en outre une mémoire première-entrée première-sortie (3) pour stocker les coordonnées des réflexions radar.

5. Dispositif (1) selon de quelconques des revendications précédentes, dans lequel la segmentation comprend une classe de objets non stationnaires et une classe d'objets stationnaires.

6. Dispositif (1) selon de quelconques des revendications précédentes, dans lequel la segmentation comprend une classe correspondant au bruit.

7. Dispositif (1) selon de quelconques des revendications précédentes, dans lequel le dispositif de calcul (4) est en outre configuré pour déterminer le système mondial de coordonnées sous forme de pose actuelle du véhicule, sur la base d'une vitesse actuelle du véhicule.

8. Procédé pour segmenter des données radar d'un véhicule, comprenant :

   la réception (S1), en provenance d'au moins un capteur radar (5) du véhicule, de données radar acquises à une pluralité de cycles de mesure ;
   l'identification (S2), pour chaque cycle de mesure, de réflexions radar et la détermination de coordonnées des réflexions radar, sur la base des données radar acquises au cycle de mesure, dans lequel les coordonnées de chaque réflexion radar comprennent une coordonnée à base de temps et des coordonnées spatiales, dans lequel les coordonnées spatiales sont définies relativement à un système mondial de coordonnées ;
   la fourniture (S3) des coordonnées des réflexions radar des cycles de mesure en tant qu'entrée à un réseau neuronal artificiel entraîné ; et
   la génération (S4) d'une segmentation des réflexions radar en tant que sortie du réseau neuronal artificiel entraîné, comprenant :
   la génération (S41) d'une première n·p-matrice caractéristique dimensionnelle (309) sur la base de l'entrée, dans lequel n indique le nombre des réflexions radar et dans lequel p est un nombre entier positif ;
   l'application (S42), pour chaque réflexion radar, d'une fonction d'agrégation max à une p·(k+1)-matrice dimensionnelle comprenant p-vecteurs caractéristiques dimensionnels de la première n·p-matrice caractéristique dimensionnelle (309) correspondant à ladite réflexion radar et k réflexions radar voisines les plus proches de ladite réflexion radar, pour générer une seconde n·p-matrice caractéristique dimensionnelle (311), dans lequel k est un nombre entier positif ; et
   la génération (S43) de la segmentation (318) des réflexions radar sur la base de la seconde n·p-matrice caractéristique dimensionnelle (311) ;
   **caractérisé en ce que**
   la coordonnée à base de temps de chaque réflexion radar a une unité de distance, dans lequel, pour chaque réflexion radar associée à un certain cycle de mesure, la coordonnée à base de temps de la réflexion radar est obtenue en multipliant un temps de mesure du cycle de mesure associé à une vitesse actuelle du véhicule, dans lequel une distance entre deux points de réflexion est calculée par la formule suivante (1) :

$$[\text{Formule (1)}]$$
$$D^2 = dx^2 + dy^2 + dz^2 + - (vt)^2$$

   dx, dy et dz indiquant des différences entre les coordonnées spatiales des deux points de réflexion pour trois axes orthogonaux du système mondial de coordonnées, v indiquant une vitesse du véhicule, et t indiquant une différence entre une coordonnée temporelle des deux points de réflexion, et
   dans lequel les k réflexions radar voisines les plus proches d'une n-ième réflexion radar sont données par les k réflexions radar ayant la distance la plus petite quant à la n-ième réflexion radar par rapport à la distance calculée selon la formule (1).

# Fig. 1

# Fig. 2

# Fig. 3

EP 4 246 183 B1

# Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018002521 A1

**Non-patent literature cited in the description**

- **QI et al.** *PointNet: Deep Learning on Point Sets for 3D Classification and Segmentation*, https://arxiv.org/abs/1612.00593.
- **ZHOU et al.** *VoxelNet: End-to-End Learning for Point Cloud Based 3D Object Detection*, https://arxiv.org/abs/1711.06396
- **SCHUMANN et al.** Semantic Segmentation on Radar Point Clouds. *21st International Conference on information fusion*, 2018, 2179-2186